# EUROPEAN PATENT SPECIFICATION

(11) **EP 2 306 706 B1**
(45) Date of publication and mention of the grant of the patent: **21.08.2013**
(21) Application number: 10172479.7
(22) Date of filing: 11.08.2010
(51) Int. Cl.: H04N 5/232, H04N 5/247, G06F 3/01, H04N 1/00

(54) **Mobile terminal having photographing control function and photographing control system**
Mobiles Endgerät mit einer Fotografiersteuerungsfunktion und Fotografiersteuerungssystem
Terminal mobile doté d'une fonction de contrôle de la photographie et système de contrôle de la photographie

(30) Priority: 08.09.2009 KR 20090084494
(43) Date of publication of application: 06.04.2011
(73) Proprietor: Pantech Co., Ltd., Seoul 121-792 (KR)
(72) Inventor: Jeon, Hyeong-Baek, Gyeonggi-do (KR)
(74) Representative: Herzog, Markus

(56) References cited:
- EP-A1- 1 791 348
- EP-A2- 0 790 734
- WO-A1-99/45511
- US-A1- 2002 140 667
- US-A1- 2006 066 723
- US-A1- 2007 025 711
- US-A1- 2007 254 640
- US-A1- 2008 212 831

## Description

### CROSS REFERENCE TO RELATED APPLICATION

This application claims priority from and the benefit under 35 U.S.C. § 119(a) of Korean Patent Application No. 10-2009-0084494, filed on September 8, 2009.

### BACKGROUND

1. FIELD

The following description relates to a photographing control technique in a mobile terminal.

2. DISCUSSION OF THE BACKGROUND

Conventionally, photographing control commands, such as zoom-in and zoom-out, in a mobile terminal having both front and rear cameras are issued by a user operating buttons or a touch screen. Meanwhile, in the case of a conventional mobile terminal having a video communication function, photographing control commands are issued through the manipulation of the buttons or the touch screen by a user, and the control for a camera of the counterpart is not possible.

It is very inconvenient for the user to input the photographing control commands, such as zoom-in and zoom-out, during photographing by physically manipulating the buttons or the touch screen in the mobile terminal equipped with a camera. In addition, when the user manipulates the buttons or the touch screen, this may cause the mobile terminal to move slightly, so that an image may be blurred or out of focus.

US 2006/066723 describes multi-camera employed within a space, capable of changing a view angle or are mounted on a movable object. The camera can arbitrarily move by a walking, a running or a flying, and the multi-camera execute a cooperative operation to provide a system capable of tracking and photographing an object mobile over a wide range. The camera include photographing means to photograph and recognize a mobile and transmitting means to transmit an identifier of the self camera, position information of the self camera, and moving direction information of the mobile to another camera.

US 2008/0212831 discloses a portable electronic device including first and second image capturing units. The operation of the second image capturing unit is controlled by user eye gestures imaged with the first image capturing unit.

WO 99/45511 describes a surveillance and monitoring system, in which operation of a narrow-angle image capturing unit is controlled by object motion imaged and detected by a wide-angle image capturing unit.

US 2007/0254640 discloses a system for remotely controlling the camera functions of a mobile camera phone by another device. The other device receives and displays data representative of the mobile camera phone's view-finder and sends control commands to the mobile phone camera.

### SUMMARY

Exemplary embodiments of the present invention are set out in the appended claims and provide a photographing control system employing an image recognition technique that is capable of controlling photographing without a direct physical manipulation from a user by controlling the operation of one camera or the processing of an image taken by the camera when a specific action has been detected from an image taken by another camera.

Further aspects of the present invention provide a photographing control system employing an image recognition technique that detects a specific action from a user image taken by one camera, and controls the operation of another camera or the processing of an image taken by the other camera when the specific action has been detected.

Further aspects of the present invention provide that, in a mobile terminal equipped with both front and rear cameras, or a mobile terminal having a video communication function, an image taken by one camera is analyzed to control the operation of another camera or the processing of an image taken by the other camera, thereby controlling photographing without the physical manipulation of a user.

Additional features will be set forth in the description which follows.

An exemplary embodiment provides a mobile terminal including an action detecting module to detect a specific action from a first image taken by a first camera of the mobile terminal; a control command creating module to create a first control command to control an operation of a second camera of a counterpart mobile terminal or a processing of an image taken by the second camera of the counterpart mobile terminal if the action detecting module has detected the specific action; a control command transmitting module to transmit the first control command created by the control command creating module to the counterpart mobile terminal; a control command receiving module to receive a second control command from the counterpart mobile terminal to control an operation of the first camera or a processing of an image taken by the first camera; and a photographing control module to control the operation of the first camera or the processing of the image taken by the first camera according to the second control command received in the control command receiving module.

An exemplary embodiment provides a mobile terminal including an image transmitting module to transmit a first image taken by a first camera of the mobile terminal to a counterpart mobile terminal; an image receiving module to receive a second image from the counterpart mobile terminal; an action detecting module to detect a specific action from the second image received from the counterpart mobile terminal in the image receiving module; and a photographing control module to control an operation of the first camera or a processing of an image taken by the first camera of the mobile terminal if the action detecting module detects the specific action.

An exemplary embodiment provides a mobile terminal including an action detecting module to detect a specific action from a first image taken by a first camera; and a photographing control module to control an operation of a second camera or a processing of a second image taken by the second camera if the action detecting detects the specific action.

An exemplary embodiment provides a photographing control system including a first mobile terminal including a first camera, an action detecting module to detect a specific action from a first image taken by the first camera, a control command creating module to create a control command to control an operation of a second camera or a processing of a second image taken by the second camera if the action detecting module detects the specific action, and a control command transmitting module to transmit the control command created by the control command creating module; and a second mobile terminal including the second camera, a control command receiving module to receive the control command from the first mobile terminal to control the operation of the second camera or the processing of the second image taken by the second camera, and a photographing control module to control the operation of the second camera or the processing of the second image taken by the second camera according to the control command received by the control command receiving module.

An exemplary embodiment provides a photographing control system including: a first mobile terminal including a first camera, and an image transmitting module to transmit a first image taken by the first camera; and a second mobile terminal including a second camera, an image receiving module to receive the first image from the first mobile terminal, an action detecting module to detect a specific action from the first image received by the image receiving module, and a photographing control module to control an operation of the second camera and a processing of a second image taken by the second camera if the action detecting module detects the specific action.

An exemplary embodiment provides a mobile terminal including: a first camera and a second camera; an action detecting module to detect a specific action from an image taken by the first camera; a photographing control module to control an operation of the second camera or a processing of an image taken by the second camera if the action detecting module detects the specific action.

An exemplary embodiment provides a mobile terminal including: an action detecting module to detect a specific action from a first image taken by a first camera of the mobile terminal; a control command creating module to create a first control command to control an operation of a second camera or a processing of an image taken by the second camera if the action detecting module has detected the specific action; and a control command transmitting module to transmit the first control command created by the control command creating module.

An exemplary embodiment provides a mobile terminal including: a control command receiving module to receive a control command to control an operation of a camera of the mobile terminal or a processing of an image taken by the camera of the mobile terminal; and a photographing control module to control the operation of the camera of the mobile terminal or the processing of the image taken by the camera of the mobile terminal according to the control command received in the control command receiving module.

An exemplary embodiment provides a mobile terminal including: an image receiving module to receive a an image; an action detecting module to detect a specific action from the image received in the image receiving module; and a photographing control module to control an operation of a camera of the mobile terminal or a processing of an image taken by the camera of the mobile terminal if the action detecting module detects the specific action.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram showing a mobile terminal having a photographing control function based on an image recognition technique according to an exemplary embodiment of the present invention.

FIG. 2 is a block diagram showing a photographing control system employing an image recognition technique according to an exemplary embodiment of the present invention.

FIG. 3 is a block diagram showing a mobile terminal having a photographing control function based on an image recognition technique according to an exemplary embodiment of the present invention.

FIG. 4 is a block diagram showing a photographing control system employing an image recognition technique according to an exemplary embodiment of the present invention.

FIG. 5 is a block diagram showing a mobile terminal having a photographing control function based on an image recognition technique according to an exemplary embodiment of the present invention.

FIG. 6 is a flowchart showing the photographing procedure of the photographing control system employing an image recognition technique according to an exemplary embodiment of the present invention.

Elements, features, and structures are denoted by the same reference numerals throughout the drawings and the detailed description, and the size and proportions of some elements may be exaggerated in the drawings for clarity and convenience.

### DETAILED DESCRIPTION

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

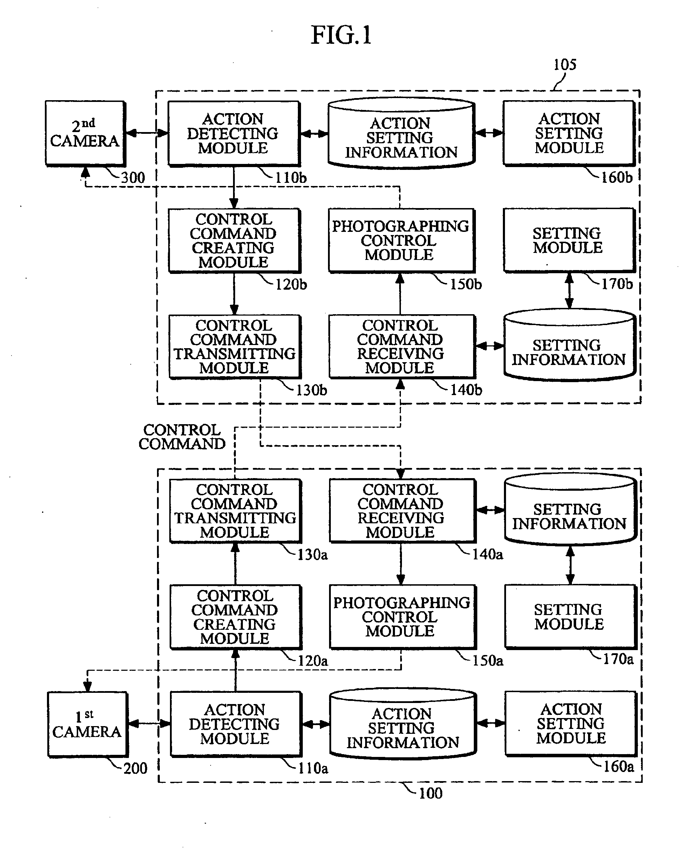

FIG. 1 is a block diagram showing a user's mobile terminal 100 and a counterpart mobile terminal 105 having a photographing control function based on an image recognition technique according to an exemplary embodiment of the present invention. The user's mobile terminal 100 having a photographing control function includes an action detecting module 110a, a control command creating module 120a, a control command transmitting module 130a, a control command receiving module 140a, and a photographing control module 150a. The user's mobile terminal 100 having the photographing control function based on the image recognition technique may further include an action setting module 160a and a setting module 170a. The counterpart mobile terminal 105 includes an action detecting module 110b, a control command creating module 120b, a control command transmitting module 130b, a control command receiving module 140b, a photographing control module 150b, an action setting module 160b, and a setting module 170b.

The action detecting module 110a detects a specific action of a user from a user image taken by a first camera 200 of the user's mobile terminal 100. Although described a being taken, the user image may be but need not be recorded or stored in a memory of the user's mobile terminal 100. The specific action of the user can be detected by analyzing the variation in features of the user image to recognize a variation in motion and/or a facial expression of the user according to an image recognition technique. The analysis of the user image according to the image recognition technique may include analysis of two or more images so as to detect variation between the two images. The specific action may be detected by analyzing variations of feature points included in the images of the user to thus recognize variations in motion or expression. Thus, the user may perform the specific action detected by the analysis of the user image according to the image recognition technique so as to control the photographing control function of the user's mobile terminal 100.

For example, the action detecting module 110a of the mobile terminal 100 may detect the specific action of the user from the user image by recognizing the motion and/or the variation in facial expression of the user, such as approach or retreat of the user with respect to the camera, a leftward or rightward movement of the user, a blink of the user's right eye or left eye, a shape of the user's mouth, an angle of the user's face, a turn of the user's face to the left or right, or a frown of the user's face.

If the action detecting module 110a of the mobile terminal 100 has detected the specific action of the user, the control command creating module 120a of the mobile terminal 100 creates a control command to control the operation of a second camera 300 of the counterpart mobile terminal 105 of or for processing of an image taken by the second camera 300 of the counterpart mobile terminal 105.

The control command transmitting module 130a transmits the control command created by the control command creating module 120a to the control command receiving terminal 140b of the counterpart mobile terminal 105. The control command transmitted from the control command transmitting module 130a of the mobile terminal 100 is received in the counterpart mobile terminal 105 via a mobile communication network to control the operation of the second camera 300 of the counterpart mobile terminal or the processing of the image taken by the second camera 300 of the counterpart mobile terminal 105.

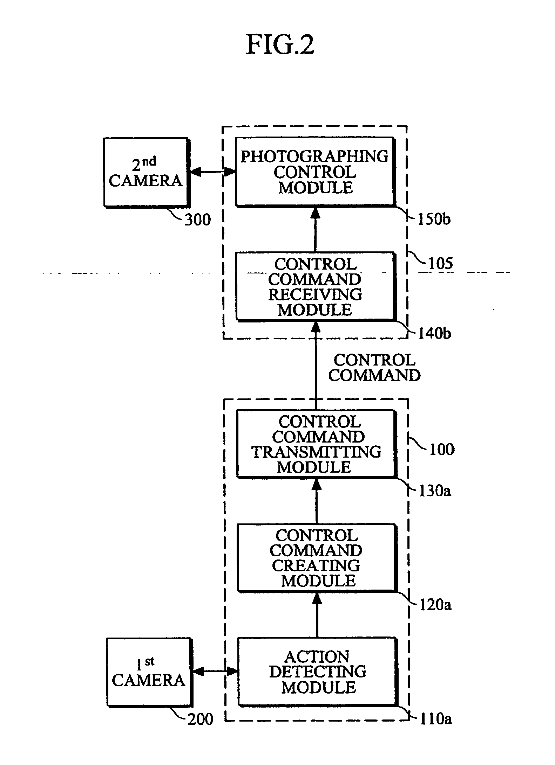

The counterpart mobile terminal 105 that has received the control command controls the operation of the second camera 300 or the processing of the image taken by the second camera 300. Details thereof will be described later with reference to FIG. 2.

The control command receiving module 140a of the user's mobile terminal 100 receives a control command from the control command transmitting module 130b of the counterpart mobile terminal 105 to control the operation of the first camera 200 or the processing of an image taken by the first camera 200.

The photographing control module 150a of the mobile terminal 100 controls the operation of the first camera 200 of the user's mobile terminal 100 or the processing of an image taken by the first camera 200 according to the control command received by the control command receiving module 140a of the mobile terminal 100.

For example, the photographing control module 150a may control a zoom-in operation or a zoom-out operation of the first camera 200, a viewing angle of the first camera 200, a photographing starting operation or video recording starting operation of the first camera 200, or a photographing terminating operation or video recording terminating operation of the first camera 200, thereby controlling the operation of the first camera 200 according to a specific action detected by the counterpart mobile terminal 105.

The photographing control module 150a controls a display of the image, a transfer of the image, a synthesis of the image, a processing of a special effect of the image, or a displacing of the user image taken by the first camera 200, so that the processing of the user image taken by the first camera 120 can be controlled according to the specific action of the counterpart mobile terminal 105.

As shown in FIG. 1, the mobile terminal 100 having the photographing control function based on the image recognition technique may further include an action setting module 160a. The action setting module 160a sets specific actions detected by the action detecting module 110a. In other words, the action setting module 160a acquires from the user information about the operation of the second camera 300 or the processing operation of an image taken by the second camera 300 of the counterpart mobile terminal 105 that are performed after a specific action has been detected and stores the operation information as action setting information in the action setting module 160a. The action detecting module 110a refers to the action setting information of the action setting module 160a if the specific action is detected.

Further, the mobile terminal 100 having the photographing control function based on the image recognition technique may further include a setting module 170a. The setting module 170a sets an on/off state of the operation of the photographing control module 150a. In other words, the setting module 170a stores information regarding an on/off state as setting information. The operation of the photographing control module 150a may be controlled according to the setting information.

The mobile terminal 100 having the photographing control function based on the image recognition technique analyzes a user image taken by one camera through the image recognition technique to detect the specific action of the user. If the specific action of the user has been detected, the operation of another camera or the processing of an image taken by another camera is controlled, thereby controlling photographing without the physical manipulation of the buttons or the touch screen by the user.

FIG. 2 is a block diagram showing a photographing control system employing the image recognition technique according to the exemplary embodiment described above. In the photographing control system employing the image recognition technique, the first camera 200 is installed in the mobile terminal 100 of a first user, and the second camera 300 is installed in the counterpart mobile terminal 105 of a second user such that the counterpart mobile terminal 105 of the second user controls the operation of the second camera 300 or the processing of the image taken by the second camera 300 according to a control command that has been transmitted from the mobile terminal 100 of the first user if the specific action has been detected from the user image taken by the first camera 200.

The action detecting module 110a of the mobile terminal 100 of the first user detects a specific action from a user image taken by the first camera 200.

The control command creating module 120a of the mobile terminal 100 of the first user creates a control command to control the operation of the second camera 300 or the processing of an image taken by the second camera 300 if the specific action has been detected by the action detecting module 110.

The control command transmitting module 130a of the mobile terminal 100 of the first user transmits the control command created by the control command creating module 120a. The control command is transmitted from the control command transmitting module 130a to the counterpart mobile terminal 105 of the second user via a mobile communication network so that the control command is used to control the operation of the second camera 300 or the processing of the image taken by the second camera 300.

The control command receiving module 140b of the counterpart mobile terminal 105 of the second user receives the control command from the mobile terminal 100 of the first user to control the operation of the second camera 300 or the processing of the image taken by the second camera 300.

The photographing control module 150b of the counterpart mobile terminal 105 of the second user controls the operation of the second camera 300 or the processing of the image taken by the second camera 300 according to the control command received in the control command receiving module 140b.

For example, the photographing control module 150b can control a zoom-in operation or a zoom-out operation of the second camera 300, a photographic angle of the second camera 300, a photographing starting operation or video starting operation of the second camera 300, or a photographing terminating operation or video terminating operation of the second camera 300. Therefore, the operation of the second camera 300 can be controlled according to a specific action of a user.

For example, the photographing control module 150b can control a display of the image, a transfer of the image, a synthesis of the image, a processing of a special effect of the image, or a displacing of the image taken by the second camera 300. Therefore, the processing of the image taken by the second camera 300 can be controlled depending on the specific action of the user.

Accordingly, the photographing control system employing the image recognition technique analyzes a user image taken by one camera through the image recognition technique to detect the specific action of the user. If the specific action of the user has been detected, the operation of another camera or the processing of an image taken by another camera is controlled, thereby controlling photographing without the manipulation of buttons or a touch screen by the user.

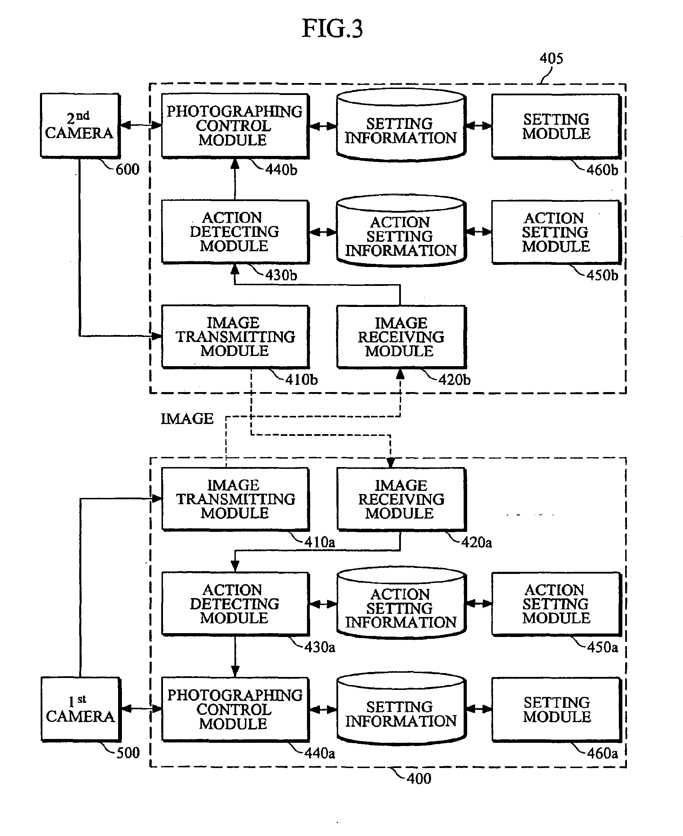

FIG. 3 is a block diagram showing a mobile terminal 400 having a photographing control function based on an image recognition technique according to an exemplary embodiment of the present invention. The mobile terminal 400 having a photographing control function based on the image recognition technique includes an image transmitting module 410a, an image receiving module 420a, an action detecting module 430a, a photographing control module 440a, an action setting module 450a, and a setting module 460a. A counterpart mobile terminal 405 includes an image transmitting module 410b, an image receiving module 420b, an action detecting module 430b, a photographing control module 440b, an action setting module 450b, and a setting module 460b.

The image transmitting module 410a transmits a user image taken by a first camera 500 to a counterpart mobile terminal 405. The user image is transmitted from the image transmitting module 410a to the counterpart mobile terminal 405 via a mobile communication network.

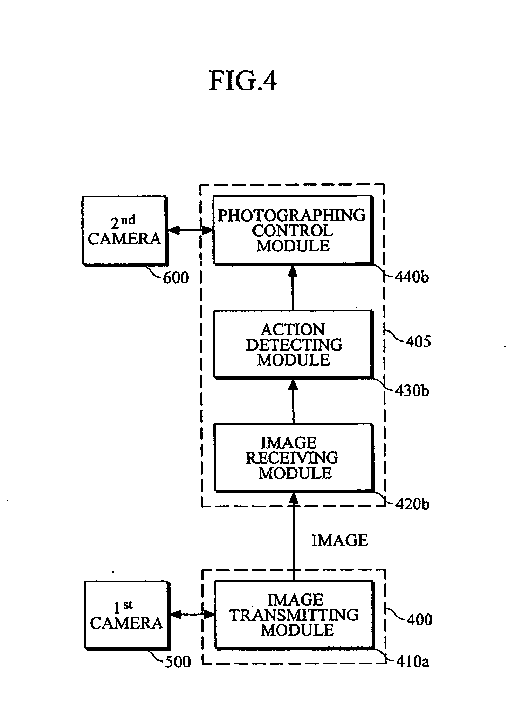

The counterpart mobile terminal 405 that has received the user image detects a specific action from the user image taken by the first camera 500 of the mobile terminal 400 to control the operation of a second camera 600 or the processing of an image taken by the second camera 600. Details thereof will be described below with reference to FIG. 4.

The image receiving module 420b of the counterpart mobile terminal 405 receives a user image received from the mobile terminal 400. After the user image taken by the first camera 500 of the mobile terminal 400 has been transmitted from the counterpart mobile terminal 405, the image receiving module 420b of the counterpart mobile terminal 405 receives the user image.

The action detecting module 430b of the counterpart mobile terminal 405 detects a specific action from the user image received by the image receiving module 420b. The specific action can be detected by analyzing the variation in features of the user image to recognize the variation in the motion and/or the facial expression of the user based on the image recognition technique.

For example, the action detecting module 430b of the counterpart mobile terminal 405 may detect the specific action of the user from the user image by recognizing the motion and/or the variation in the facial expression of the user, such as approach or retreat of the user with respect to the camera, a leftward or rightward movement of the user, a blink of the user's right eye or left eye, a shape of the user's mouth, an inclination of the user's face, a turn of the user's face to the left or right, or a frown of the user's face.

If the action detecting module 430b of the counterpart mobile terminal 405 has detected the specific action, the photographing control module 440b controls the operation of the second camera 600 or the processing of an image taken by the second camera 600.

For example, the photographing control module 440b of the counterpart mobile terminal 405 can control the zoom-in operation or the zoom-out operation of the second camera 600, the photographic angle of the second camera 600, the starting operation of the photographing, the video recording starting operation, the video recording terminating operation, or the terminating operation of the photographing, thereby controlling the operation of the second camera 600 according to the specific action of the user.

In addition, the photographing control module 440b of the counterpart mobile terminal 405 can control a display of the image, a transfer of the image, a synthesis of the image, a processing of a special effect of the image, or the displacing of an image taken by the second camera 600, thereby controlling the processing of an image taken by the second camera 600 according to the specific action of the user.

The mobile terminal 405 having the photographing control function based on the image recognition technique may further include an action setting module 450b. The action setting module 450a sets specific actions detected by the action detecting module 430b. In other words, the action setting module 450b acquires from the user information about the operation of the second camera 600 or the processing operation of an image taken by the second camera 600 of the counterpart mobile terminal 405 that are performed after a specific action has been detected and stores the operation information as action setting information in the action setting module 450b. The action detecting module 430b refers to the action setting information of the action setting module 450b when the specific action is detected.

Further, the mobile terminal 405 having the photographing control function based on the image recognition technique may further include a setting module 460b. The setting module 460b sets an on/off state of the operation of the photographing control module 440b. In other words, the setting module 460b stores information regarding an on/off state as setting information. The operation of the photographing control module 440b may be controlled according to the setting information.

The mobile terminal having the photographing control function based on the image recognition technique analyzes a user image taken by one camera through the image recognition technique to detect the specific action of the user. If the specific action of the user has been detected, the operation of another camera or the processing of an image taken by another camera is controlled, thereby controlling photographing without the manipulation of buttons or a touch screen by the user.

FIG. 4 is a block diagram showing a photographing control system employing the image recognition technique. In the photographing control system employing the image recognition technique, the first camera 500 is installed in the mobile terminal 400 of a first user, and the second camera 600 is installed in the counterpart mobile terminal 405 of a second user such that the mobile terminal 400 of the first user transmits a user image taken by the first camera 500, and the counterpart mobile terminal 405 of the second user which has received the user image controls the operation of the second camera 600 or the processing of the user image taken by the second camera 600 if the specific action has been detected from the user image.

The image transmitting module 410a of the mobile terminal 400 of the first user transmits the user image taken by the first camera 500. The user image is transmitted from the image transmitting module 410a of the mobile terminal 400 of the first user to the counterpart mobile terminal 405 of the second user via a mobile communication network.

The image receiving module 420b of the counterpart mobile terminal 405 of the second user receives the user image from the mobile terminal 400 of the first user. The action detecting module 430b of the counterpart mobile terminal 405 of the second user detects a specific action from the user image received in the image receiving module 420b thereof.

The photographing control module 440b of the counterpart mobile terminal 405 of the second user controls the operation of the second camera 600 or the processing of an image taken by the second camera 600 if the action detecting module 430b has detected the specific action.

For example, the photographing control module 440b can control a zoom-in operation or a zoom-out operation of the second camera 600, a photographic angle of the second camera 600, a starting operation of the photographing, a video starting operation, a video terminating operation, or a terminating of the photographing, thereby controlling the operation of the second camera 600 according to the specific action of the user.

For example, the photographing control module 440b can control a display of the image, a transfer of the image, a synthesis of the image, a processing of a special effect of the image, or a displacing of the image taken by the second camera 600, so that the processing of the image taken by the second camera 600 can be controlled according to the specific action of the user.

The photographing control system employing the image recognition technique analyzes a user image taken by one camera to detect the specific action of the user. When the specific action of the user has been detected, the operation of another camera or the processing of an image taken by another camera is controlled, thereby controlling photographing without the manipulation of buttons or a touch screen by the user.

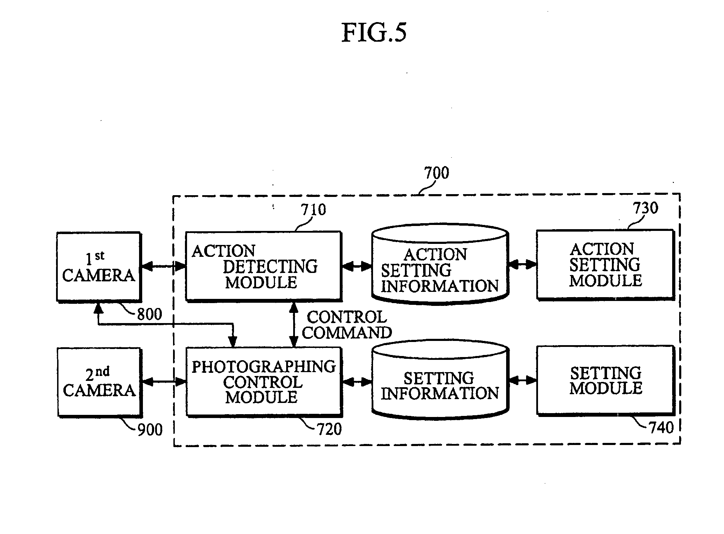

FIG. 5 is a block diagram showing a mobile terminal 700 having a photographing control function based on an image recognition technique according to an exemplary embodiment of the present invention. The mobile terminal 700 having the photographing control function based on the image recognition technique is equipped with first and second cameras 800 and 900. The first and second cameras 800 and 900 may be dispose on opposite sides of the mobile terminal 700. The mobile terminal 700 includes an action detecting module 710 and a photographing control module 720. The action detecting module 710 detects a specific action from a user image taken by the first camera 800, and the photographing control module 720 controls the operation of the second camera 900 or the processing of an image taken by the second camera 900 when the specific action has been detected.

The action detecting module 710 detects a specific action from the user image taken by the first camera 800. The specific action of the user can be detected by analyzing a variation in features of the user image to recognize the variation in a motion and/or a facial expression of the user based on the image recognition technique.

For example, the action detecting module 710 may detect the specific action of the user from the user image by recognizing the motion and/or the variation in the facial expression of the user, such as approach or retreat of the user with respect to the camera, a leftward or a rightward movement of the user, a blink of the user's right eye or left eye, a shape of the user's mouth, an inclination of the user's face, a turn of the user's face to the left or right, or a frown of the user's face.

The photographing control module 720 controls the operation of the second camera 900 or the processing of an image taken by the second camera 900 when the action detecting module 710 has detected the specific action.

For example, the photographing control module 720 can control a zoom-in operation or a zoom-out operation of the second camera 900, a photographic angle of the second camera 900, a starting operation of the photographing, a video recording starting operation, a video recording terminating operation, or a terminating of the photographing, thereby controlling the operation of the second camera 900 according to the detected specific action of the user.

In addition, the photographing control module 720 can control a display of the image, a transfer of the image, a synthesis of the image, a processing of a special effect of the image, or a displacing of the image taken by the second camera 900, thereby controlling the processing of the image taken by the second camera 900 according to the detected specific action of the user.

Therefore, the mobile terminal having the photographing control function based on the image recognition technique analyzes a user image taken by one camera through the image recognition technique to detect the specific action of the user. When the specific action of the user is detected, the operation of another camera or the processing of an image taken by another camera is controlled, thereby controlling photographing without the manipulation of buttons or a touch screen by a user.

As shown in FIG. 5, the mobile terminal 700 having the photographing control function based on the image recognition technique may further include an action setting module 730. The action setting module 730 sets specific actions detected by the action detecting modules 110, 430, and 710. In other words, the action setting module 730 acquires from the user information about the operation of the second camera 900 or the processing operation of an image taken by the second camera 900 that are performed after a specific action has been detected and stores the operation information as action setting information in the action setting module 730. The action detecting module 710 refers to the action setting information of the action setting module 730 when the specific action is detected.

As shown FIG. 5, the mobile terminal 700 having the photographing control function based on the image recognition technique may further include setting module 740. The setting module 740 sets an on/off state of the operation of the photographing control module 720.

In other words, the setting module 740 stores information regarding an on/off state as setting information. The operation of the photographing control module 720 may be controlled according to the setting information.

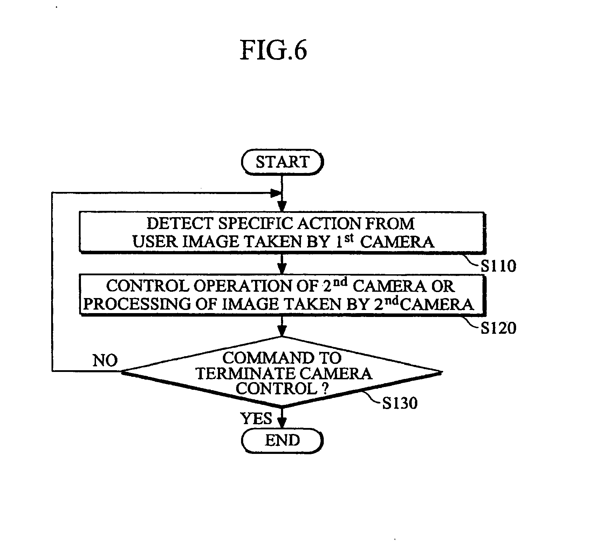

Hereinafter, a photographing control operation of the photographing control system having the above structure and employing the image recognition technique will be described with reference to FIG. 6. FIG. 6 is a flowchart showing the photographing controlling procedure of the photographing control system employing the image recognition technique.

If a user image is taken by a first camera, the photographing control system employing the image recognition technique detects a specific action from the user image taken by the first camera in operation S110.

The photographing control system can detect the specific action of the user by detecting, based on the user image, that the user approaches the first camera or moves away from the first camera. The photographing control system detects whether the user approaches or moves away from the first camera by recognizing a variation in the size of features of the user image taken by the first camera.

The photographing control system can detect the specific action of the user by detecting, based on the user image, that the user moves leftward or rightward. In this case, the photographing control system detects that the user moves leftward or rightward by recognizing a displacement of the features, the rotation of the features, or the inclination of the features of the user image taken by the first camera.

The photographing control system can detect the specific action of the user by detecting, based on the user image, that a user's right eye or left eye blinks. In this case, the photographing control system detects that the user's right eye or left eye blinks by recognizing a variation in the features of the user image, which is taken by the first camera, related to the user's right eye or left eye.

The photographing control system can detect the specific action of the user by detecting a shape of a user's mouth from the user image. In this case, the mouth shape of the user can be detected by recognizing a variation in features related to a mouth of the user image taken by the first camera.

The photographing control system can detect the specific action of the user by detecting, based on the user image, the inclination of a user's face. In this case, the inclination of the user's face can be detected by recognizing the displacement of the features, the rotation of the features, or the inclination of the features of the user image taken by the first camera.

The photographing control system can detect the specific action of the user by detecting, based on the user image, a turn of the user's face to the left or the right. In this case, the photographing control system detects the turn of the user's face to the left or the right by recognizing the displacement of features, the rotation of the features, or the inclination of the features of the user image taken by the first camera.

In addition, the photographing control system can detect the specific action of the user by detecting, based on the user image, a frown of the user's face. In this case, the frown of the user's face can be detected by recognizing a variation in features related to the eyes, nose, and mouth of the user of the user image taken by the first camera.

If the specific action has been detected in operation S110, the photographing control system employing the image recognition technique controls the operation of the second camera or the processing of an image taken by the second camera in operation S120. The photographing control system repeatedly performs the photographing control operation until a command to terminate the photographing control operation is received in operation S130.

For example, the photographing control system can control a zoom-in operation or a zoom-out operation of the second camera, a photographic angle of the second camera, a starting operation of the photographing, a video recording starting operation, a video recording terminating operation, or a terminating of the photographing in operation S120, thereby controlling the operation of the second camera according to the detected specific action from the user image taken by the first camera.

The photographing control system can control a display of the image, a transfer of the image, a synthesis of the image, a processing of a special effect of the image, or a displacing of the image taken by the second camera in operation S120, so that the processing of the image taken by the second camera can be controlled according to the specific action from the user image taken by the first camera.

In a mobile terminal having both front and rear cameras or a mobile terminal having a video communication function, an image taken by one camera is analyzed, thereby controlling the operation of the other camera or the processing of an image taken by the other camera. Accordingly, photographing can be controlled without the manipulation of buttons or a touch screen by the user.

Hereinafter, examples of applying the photographing control system employing the image recognition technique to mobile terminals will be described.

For example, the photographing control system employing the image recognition technique may detect from a user image taken by the first camera that a user approaches the first camera such that a second camera performs a zoom-in operation, or may detect that the user moves back from the first camera such that the second camera performs a zoom-out operation. In other words, the photographing control system may control the zoom-in operation or the zoom-out operation of the second camera through the detection of the approaching the first camera or moving away from the first camera of the user without the manipulation of buttons or a touch screen by the user.

In addition, the photographing control system employing the image recognition technique may detect the leftward movement of a user from a user image taken by the first camera to rotate the photographic angle of the second camera leftward, or may detect the rightward movement of the user from the user image to rotate the photographic angle of the second camera rightward. In other words, the photographing control system may control the photographic angle through the detection of the rightward or leftward movement of the user without the manipulation of buttons or a touch screen by the user.

For example, the photographing control system employing the image recognition technique may detect the blink of a user's left eye from a user image taken by the first camera to start the photographing operation of the second camera or video recording of the second camera, or may detect the blink of a user's right eye to terminate the photographing operation of the second camera or video recording of the second camera. In other words, the photographing control system may control the starting or the terminating of the photographing operation or video recording of the second camera of the second camera through the detection of the blink of the user's left eye or right eye without the manipulation of buttons or a touch screen by the user.

For example, the photographing control system employing the image recognition technique may detect an open state of the user's mouth from a user image taken by the first camera to start the display of an image taken by the second camera, or may detect a protrusion state of the user's mouth to terminate the display of the image of the second camera. In other words, the photographing control system may control the display of the image of the second camera through the detection of the shape of the user's mouth without the manipulation of buttons or a touch screen by the user.

For example, the photographing control system employing the image recognition technique may detect forward inclination of the user's face towards the camera from a user image taken by the first camera to zoom in the second camera, or may detect backward inclination of the user's face away from the camera to zoom out the second camera. In other words, the photographing control system may control the zoom-in or zoom-out operation of the second camera through the detection of the angle of the user's face without the manipulation of buttons or a touch screen by the user.

For example, the photographing control system employing the image recognition technique may detect the turn of the user's face to the left from a user image taken by the first camera to symmetrically divide both images taken by the first and second cameras, synthesize the divided images, and then display the synthesized image. The photographing control system may detect the turn of the user's face to the right from the user image to insert the image of the first camera into the image of the second camera through Picture in Picture (PIP) and display the synthesized image. In other words, the photographing control system may control synthesis of images through the detection of the turning of the user's face without the manipulation of buttons or a touch screen by the user.

For example, the photographing control system employing the image recognition technique may detect the frown of the user's face from a user image taken by the first camera to transfer an image taken by the second camera to a mobile terminal of another user. In other words, the photographing control system may control the transfer of the image taken by the second camera through the detection of the frown of the user's face without the manipulation of buttons or a touch screen by the user.

The photographing control modules 150, 440, and 720 may control the operation of the second camera or the processing of an image taken by the second camera by reflecting the speed or frequency with which the user moves towards or back from the first camera, the speed or the frequency with which the user's left eye or right eye blinks, the degree to which the user's mouth is open, the inclination degree of the user's face, the speed or the frequency in the turn of the user's face to the left or the right, or the degree to which the user frowns.

For example, according to the speed at which the user moves toward or away from the first camera, the photographing control modules 150, 440, and 720 can variably control the zoom-in or zoom-out speed of the second camera.

For example, if the photographing control system detects that a user's face is inclined once, the photographing control modules 150, 440, and 720 may transfer the image taken by the second camera to the counterpart mobile terminal 105. If the photographing control system detects that the user's face is inclined twice, the photographing control modules 150, 440, and 720 may synthesize images taken by the first and second cameras and then transfer the synthesized image to the counterpart mobile terminal 105.

It will be apparent to those skilled in the art that various modifications and variation can be made in the present invention without departing from the scope of the appended claims. Thus, it is intended that the present invention cover the modifications and variations of this invention provided they come within the scope of the appended claims.

In a mobile terminal having a photographing control function based on an image recognition technique and a photographing control system employing an image recognition technique, a specific action is detected from a user image taken by one camera, and the operation of another camera or the processing of an image taken by the camera is controlled when the specific action has been detected, thereby controlling photographing without direct physical manipulation of a user.

## Claims

1. A photographing control system, comprising a first mobile terminal (400) and a second mobile terminal (405),
the first mobile terminal comprising:
- a first camera (500),
the second mobile terminal (405) comprising:
- a second camera (600),
**characterized in that**
the first mobile terminal comprises:
- an image transmitting module (410a) adapted to transmit a first image taken by the first camera to the second mobile terminal (405);
- an image receiving module (420a) adapted to receive a second image from the second mobile terminal (405);
- an action detecting module (430a) adapted to detect a specific action of a user from the second image received by the image receiving module; and
- a photographing control module (440a) adapted to control the operation of the first camera or the processing of the image taken by the first camera, if the action detecting module detects the specific action;
and the second mobile terminal comprises:
- an image transmitting module (410b) adapted to transmit the second image taken by the second camera to the first mobile terminal (405);
- an image receiving module (420b) adapted to receive the first image from the first mobile terminal (400),
- an action detecting module (430b) adapted to detect a specific action of a user from the first image received by the image receiving module, and
- a photographing control module (440b) adapted to control an operation of the second camera and a processing of the image taken by the second camera if the action detecting module detects the specific action.

2. A photographing control system of claim 1, wherein the first mobile terminal (400) further comprises an action setting module (450a) adapted to set information about the operation of the first camera or the processing of the image taken by the first camera that is performed if a specific action is detected by the action detecting module.

3. A photographing control system of claim 1 or 2, wherein the first mobile terminal (400) further comprises a setting module (460a) adapted to set an on/off state of an operation of the photographing control module.

4. A photographing control system of claim 1 to 3, wherein the photographing control module (440a) of the first mobile terminal (400) is adapted to control at least one of:
- a zoom-in operation or a zoom-out operation of one of the first camera,
- a viewing angle of the first camera,
- a photographing starting operation or a photographing terminating operation of the first camera,
- display of an image taken by the first or second camera,
- transfer of an image taken by the first or second camera,
- synthesis of an image taken by the first or second camera,
- processing of a special effect of an image taken by the first or second camera,
- displacement of an image taken by the first or second camera.

5. A photographing control system of claim 1 to 4, wherein the action detecting module (430a) of the first mobile terminal (400) is adapted to detect at least one of:
- from the second image that a user approaches or moves away from the second camera (600),
- from the second image that a user moves leftward or rightward,
- blink of a user's left or right eye from the second image,
- a shape of a user's mouth from the second image,
- from the second image inclination of a user's face,
- from the second image turning of a corresponding user's face leftward or rightward,
- a frown of a corresponding user's face from the second image.

6. A method for photographing controlling procedure of a photographing control system, the photographing control system comprising a first mobile terminal (400) and a second mobile terminal (405),
the first mobile terminal (400) comprising:
- a first camera (500),
the second mobile terminal (405) comprising:
- a second camera (600),
**characterized in that**
the method comprises:
in the first mobile terminal (400):
- transmitting a first image taken by the first camera to the second mobile terminal (405);
- receiving a second image from the second mobile terminal (405);
- detecting a specific action of a user from the received second image;
and
- controlling the operation of the first camera or the processing of the image taken by the first camera, if the specific action is detected;
and in the second mobile terminal (405):
- transmitting the second image taken by the second camera to the first mobile terminal (400);
- receiving the first image from the first mobile terminal (400);
- detecting a specific action of a user from the received first image; and
- controlling the operation of th second camera or the processing of the image taken by the second camera, if the specific action is detected.

## Patentansprüche

1. Fotografie-Regelungs-/-Steuerungssystem, umfassend ein erstes mobiles Terminal (400) und ein zweites mobiles Terminal (405),
wobei das erste mobile Terminal umfasst:
- eine erste Kamera (500),
wobei das zweite mobile Terminal (405) umfasst:
- eine zweite Kamera (600),
**dadurch gekennzeichnet, dass**
das erste mobile Terminal umfasst:
- ein Bild-Übertragungsmodul (410a), das dazu eingerichtet ist, ein durch die erste Kamera aufgenommenes erstes Bild an das zweite mobile Terminal (405) zu übertragen;
- ein Bild-Empfangsmodul (420a), das dazu eingerichtet ist, ein zweites Bild von dem zweiten mobilen Terminal (405) zu empfangen;
- ein Bewegungserfassungsmodul (430a), das dazu eingerichtet ist, von dem durch das Bild-Empfangsmodul empfangenen zweiten Bild eine spezifische Bewegung eines Benutzers zu erfassen; und
- ein Fotografie-Regelungs-/-Steuerungsmodul (440a), das dazu eingerichtet ist, den Betrieb der ersten Kamera oder die Verarbeitung des durch die erste Kamera aufgenommenen Bildes zu regeln/steuern, wenn das Bewegungserfassungsmodul die spezifische Bewegung erfasst;
und das zweite mobile Terminal umfasst:
- ein Bild-Übertragungsmodul (410b), das dazu eingerichtet ist, das zweite durch die zweite Kamera aufgenommenes Bild an das erste mobile Terminal (405) zu übertragen;
- ein Bild-Empfangsmodul (420b), das dazu eingerichtet ist, das erste Bild von dem ersten mobilen Terminal (400) zu empfangen;
- ein Bewegungserfassungsmodul (430b), das dazu eingerichtet ist, von dem durch das Bild-Empfangsmodul empfangenen ersten Bild eine spezifische Bewegung eines Benutzers zu erfassen; und
- ein Fotografie-Regelungs-/-Steuerungsmodul (440b), das dazu eingerichtet ist, einen Betrieb der zweiten Kamera oder eine Verarbeitung des durch die zweite Kamera aufgenommenen Bildes zu regeln/steuern, wenn das Bewegungserfassungsmodul die spezifische Bewegung erfasst.

2. Fotografie-Regelungs-/-Steuerungssystem nach Anspruch 1, wobei das erste mobile Terminal (400) ein Bewegungseinstellungsmodul (450a), das dazu eingerichtet ist, eine Information über den Betrieb der ersten Kamera oder die Verarbeitung des durch die erste Kamera aufgenommenen Bildes, der oder die durchgeführt wird, wenn eine spezifische Bewegung durch das Bewegungserfassungsmodul erfasst wird, einzustellen, ferner umfasst.

3. Fotografie-Regelungs-/-Steuerungssystem nach Anspruch 1 oder 2, wobei das erste mobile Terminal (400) ein Einstellungsmodul (460a), das dazu eingerichtet ist, einen Ein-/Aus-Zustand eines Betriebs des Fotografie-Regelungs-/-Steuerungsmoduls einzustellen, ferner umfasst.

4. Fotografie-Regelungs-/-Steuerungssystem nach einem der Ansprüche 1 bis 3, wobei das Fotografie-Regelungs-/-Steuerungsmodul (440a) des ersten mobilen Terminals (400) dazu eingerichtet ist, wenigstens eines der Folgenden zu regeln/steuern:
- einen Zoom-in-Betrieb oder einen Zoom-out-Betrieb einer der ersten Kamera,
- einen Sichtwinkel der ersten Kamera,
- einen Fotografie-Anfangsbetrieb oder einen Fotografie-Beendigungsbetrieb der ersten Kamera,
- Anzeigen eines durch die erste oder zweite Kamera aufgenommenen Bildes,
- Übertragung eines durch die erste oder zweite Kamera aufgenommenen Bildes,
- Synthese eines durch die erste oder zweite Kamera aufgenommenen Bildes,
- Verarbeitung eines Spezialeffekts eines durch die erste oder zweite Kamera aufgenommenen Bildes,
- Verschiebung eines durch die erste oder zweite Kamera aufgenommenen Bildes.

5. Fotografie-Regelungs-/-Steuerungssystem nach einem der Ansprüche 1 bis 4, wobei das Bewegungserfassungsmodul (430a) des ersten mobilen Terminals (400) dazu eingerichtet ist, wenigstens eines der Folgenden zu erfassen:
- von dem zweiten Bild, dass ein Benutzer sich der zweiten Kamera (600) nähert oder sich weg von der zweiten Kamera (600) bewegt,
- von dem zweiten Bild, dass ein Benutzer sich nach links oder nach rechts bewegt,
- ein Blinzeln des linken oder rechten Auges eines Benutzers von dem zweiten Bild,
- eine Form des Mundes eines Benutzers von dem zweiten Bild,
- von dem zweiten Bild eine Schrägstellung des Gesichtes eines Benutzers
- von dem zweiten Bild Drehen des Gesichtes eines entsprechenden Benutzers nach links oder nach rechts
- ein Stirnrunzeln des Gesichtes eines entsprechenden Benutzers von dem zweiten Bild.

6. Verfahren zum Fotografie-Regelungs-/-Steuerungsablauf eines Fotografie-Regelungs-/-Steuerungssystems, das Fotografie-Regelungs-/-Steuerungssystem umfassend ein erstes mobiles Terminal (400) und ein zweites mobiles Terminal (405),
wobei das erste mobile Terminal (400) umfasst:
- eine erste Kamera (500),
wobei das zweite mobile Terminal (405) umfasst:
- eine zweite Kamera (600),
**dadurch gekennzeichnet, dass**
das Verfahren umfasst:
in dem ersten mobilen Terminal (400):
- Übertragen eines durch die erste Kamera aufgenommenen ersten Bildes an das zweite mobile Terminal (405);
- Empfangen eines zweiten Bildes von dem zweiten mobilen Terminal (405);
- Erfassen einer spezifischen Bewegung eines Benutzers von dem empfangenen zweiten Bild;
und
- Regeln/Steuern des Betriebs der ersten Kamera oder der Verarbeitung des durch die erste Kamera aufgenommenen Bildes, wenn die spezifische Bewegung erfasst wird;
und in dem zweiten mobilen Terminal (405):
- Übertragen des durch die zweite Kamera aufgenommenen zweiten Bildes an das erste mobile Terminal (400);
- Empfangen des ersten Bildes von dem ersten mobilen Terminal (400);
- Erfassen einer spezifischen Bewegung eines Benutzers von dem empfangenen ersten Bild; und
- Regeln/Steuern des Betriebs der zweiten Kamera oder der Verarbeitung des durch die zweite Kamera aufgenommenen Bildes, wenn die spezifische Bewegung erfasst wird.

## Revendications

1. Système de contrôle de prise de vue, comprenant un premier terminal mobile (400) et un second terminal mobile (405),
le premier terminal mobile comprenant :
- un premier appareil-photo (500),
le second terminal mobile comprenant :
- un second appareil-photo (600),
**caractérisé en ce que**
le premier terminal mobile comprend :
- un module de transmission d'images (410a) conçu pour transmettre une première image prise par le premier appareil-photo au second terminal mobile (405) ;
- un module de réception d'images (420a) conçu pour recevoir une seconde image à partir du second terminal mobile (405) ;
- un module de détection d'action (430a) conçu pour détecter une action spécifique d'un utilisateur à partir de la seconde image reçue par le module de réception d'image ; et
- un module de contrôle de prise de vue (440a) conçu pour contrôler le fonctionnement du premier appareil-photo ou le traitement de l'image prise par le premier appareil-photo, si le module de détection d'action détecte l'action spécifique ;
et le second terminal mobile comprend :
- un module de transmission d'images (410b) conçu pour transmettre la seconde image prise par le second appareil-photo au premier terminal mobile (405) ;
- un module de réception d'images (420b) conçu pour recevoir la première image à partir du premier terminal mobile (400),
- un module de détection d'action (430b) conçu pour détecter une action spécifique d'un utilisateur à partir de la première image reçue par le module de réception d'image, et
- un module de contrôle de prise de vue (440b) conçu pour contrôler un fonctionnement du second appareil-photo et un traitement de l'image prise par le second appareil-photo si le module de détection d'action détecte l'action spécifique.

2. Système de contrôle de prise de vue selon la revendication 1, dans lequel le premier terminal mobile (400) comprend en outre un module de définition d'action (450a) conçu pour définir des informations concernant le fonctionnement du premier appareil-photo ou le traitement de l'image prise par le premier appareil-photo qui est effectué si une action spécifique est détectée par le module de détection d'action.

3. Système de contrôle de prise de vue selon la revendication 1 ou 2, dans lequel le premier terminal mobile (400) comprend en outre un module de définition (460a) conçu pour définir un état activé/désactivé d'un fonctionnement du module de contrôle de prise de vue.

4. Système de contrôle de prise de vue selon les revendications 1 à 3, dans lequel le module de contrôle de prise de vue (440a) du premier terminal mobile (400) est conçu pour contrôler au moins un parmi :
- une opération de zoom avant ou une opération de zoom arrière du premier appareil-photo,
- un angle de vue du premier appareil-photo,
- une opération de démarrage de prise de vue ou une opération de fin de prise de vue du premier appareil-photo,
- l'affichage d'une image prise par le premier ou le second appareil-photo,
- le transfert d'une image prise par le premier ou le second appareil-photo,
- la synthèse d'une image prise par le premier ou le second appareil-photo,
- le traitement d'un effet spécial d'une image prise par le premier ou le second appareil-photo,
- le déplacement d'une image prise par le premier ou le second appareil-photo.

5. Système de contrôle de prise de vue selon les revendications 1 à 4, dans lequel le module de détection d'action (430a) du premier terminal mobile (400) est conçu pour détecter au moins un parmi :
- le rapprochement ou l'éloignement d'un utilisateur par rapport au second appareil-photo (600) à partir de la seconde image,
- le déplacement d'un utilisateur vers la gauche ou vers la droite à partir de la seconde image,
- le clignement de l'oeil gauche ou droit d'un utilisateur à partir de la seconde image,
- une forme de la bouche d'un utilisateur à partir de la seconde image,
- l'inclinaison du visage d'un utilisateur à partir de la seconde image,
- la rotation vers la gauche ou vers la droite du visage d'un utilisateur à partir de la seconde image,
- un froncement de sourcils du visage d'un utilisateur correspondant à partir de la seconde image.

6. Procédé pour une procédure de contrôle de prise de vue d'un système de contrôle de prise de vue, le système de contrôle de prise de vue comprenant un premier terminal mobile (400) et un second terminal mobile (405),
le premier terminal mobile (400) comprenant :
- un premier appareil-photo (500),
le second terminal mobile (405) comprenant :
- un second appareil-photo (600),
**caractérisé en ce que**
le procédé comprend :
dans le premier terminal mobile (400) :
- la transmission d'une première image prise par le premier appareil-photo au second terminal mobile (405) ;
- la réception d'une seconde image à partir du second terminal mobile (405) ;
- la détection d'une action spécifique d'un utilisateur à partir de la seconde image reçue ;
et
- le contrôle du fonctionnement du premier appareil-photo ou du traitement de l'image prise par le premier appareil-photo, si l'action spécifique est détectée ;
et dans le second terminal mobile (405) :
- la transmission de la seconde image prise par le second appareil-photo au premier terminal mobile (400) ;
- la réception de la première image à partir du premier terminal mobile (400),
- la détection d'une action spécifique d'un utilisateur à partir de la première image reçue ; et
- le contrôle du fonctionnement du second appareil-photo ou le traitement de l'image prise par le second appareil-photo, si l'action spécifique est détectée.
